# EUROPEAN PATENT SPECIFICATION

(11) **EP 4 488 491 B1**
(45) Date of publication and mention of the grant of the patent: **04.03.2026**
(21) Application number: 24177649.1
(22) Date of filing: 23.05.2024
(51) Int. Cl.: F01D 9/06, F01D 25/00, F02C 7/25, F16L 57/04

(54) **PIPE ASSEMBLY**
ROHRANORDNUNG
ENSEMBLE DE TUYAU

(30) Priority: 02.06.2023 GB 202308230
(43) Date of publication of application: 08.01.2025
(73) Proprietor: Rolls-Royce Deutschland Ltd & Co KG, 15827 Blankenfelde-Mahlow (DE)
(72) Inventor: SACHA, Jiri, 15827 Blankenfelde-Mahlow (DE)

(56) References cited:
- EP-A1- 1 987 863
- EP-A1- 2 896 862
- CN-A- 115 111 063
- US-A1- 2022 055 756

## Description

### Field

This invention relates to a pipe assembly for a gas turbine engine and a gas turbine engine that includes such a pipe assembly.

### Background

In machines, such as, e.g., gas turbines or aircraft engines, pipes for conducting fluid media have to traverse zones having restrictions due to flammability risks. Those different zones within the machine are, e.g., separated by firewalls which have to be traversed by the pipe while allowing for a certain misalignment and having fluid sealing capabilities.

Fireproof traverses for pipes are known in general from, e.g., United States patent applications US 2022/0055756 A1 and US 2020/0049279 A1. Those designs do not provide movability in the axial direction of the pipe which is, e.g., required for mechanical movements of the involved parts.

Therefore, pipe assemblies providing in particular some axial movability are required for a fireproof pipe traverse of a firewall, while retaining sealing capabilities. There is a need to provide a pipe assembly that addresses the aforementioned problems or at least provides a useful alternative to known pipe assemblies.

### Summary

The present invention provides a pipe assembly and a gas turbine engine as set out in the appended claims.

In a first aspect there is provided a pipe assembly for pipe traversing a firewall from a first zone to a second zone in an engine, such as, e.g., an aircraft engine. In such engines, zones exist which have to be separated by a material wall, the firewall, to prevent the effects of a fire in one zone, spreading to the other. In addition, the pipe assembly has to provide some misalignment capability (primarily in axial direction, but to some extent also in radial direction) to adjust for movements of the involved parts.

A shield device of the pipe assembly provides a spatial separation between a sealing space around the pipe and a part of the first zone. The sealing space has an opening towards another part of the first space, i.e., the enclosure by the shield device is not complete.

A sealing device is movably located within the sealing space through that opening to seal off the sealing space against the first zone. Therefore, the sealing space is closed off against the first zone by the shield device and the sealing device. The movability allows, e.g., the axial adjustment to movements, while keeping the separation between the zones on either side of the firewall.

The shield device and the sealing device are made from a fireproof material, e.g., they are made from a metal or are rubber-free to ensure a fireproof pipe assembly. The shield device and the sealing device may be made from the same fireproof material or different fireproof materials.

At least one part of the shield device is elastically biased against the sealing device, in particular, the at least one sealing element. With this pretension (or bias) in the shield device, the sealing effect can be enhanced.

In some embodiments, the sealing assembly is connected to the firewall so that it will move together with the firewall.

In some embodiments, the sealing space around the pipe is at least in parts convex towards the longitudinal axis of the pipe. An example for a convex space is, e.g., a cylindrical space or a cylindrical space with an attached convex space.

For a good sealing effect, the sealing space comprises at least one section which has a circular, elliptical or polygonal cross-section. Sealing elements can be adapted to those shapes. Furthermore, the sealing space can comprise at least one section which is symmetric to the longitudinal axis of the pipe. One example would be again a cylindrical space or a combined cylindrical-conical space.

In some embodiments, the sealing device comprises at least one sealing element which in operation seals against the inner surface of the shield device. The sealing element can, e.g., be made from a metal which is softer than the material of the shield device, against the at least one sealing element is sealing off. The sealing element may be a sealing ring.

In some embodiments, the pipe assembly comprises at least one vibration damping device.

For a further improvement of the sealing, at least one sealing lip can be provided, in particular at the inner wall of the sealing space to protect the sealing sliding components from direct contact with splashing liquid from the outside.

In some embodiments the shield device is made in one piece with the pipe, e.g. in a casting procedure. It is also possible that the shield device is attached to the pipe, e.g. via connection means (e.g. by welding).

In a second aspect a gas turbine engine is provided, in particular an aircraft engine. The gas turbine engine includes at least one pipe assembly of the first aspect.

### Brief description of the drawings

Embodiments will now be described by way of example only, with reference to the Figures, in which:
**Figure 1** shows a sectional view of a first embodiment of a pipe assembly;
**Figure 2** shows a sectional view of a second embodiment of a pipe assembly; and
**Figure 3**shows a sectional view of third embodiment of a pipe assembly.

The following table lists the reference numerals used in the drawings with the features to which they refer:

| Ref no. | Feature | Figure |
|---|---|---|
| 1 | Pipe | 1 2 3 |
| 2 | Shield device | 1 2 3 |
| 2a | Conical part of shield device | 1 2 3 |
| 2b | Vertical part of shield device | 1 2 3 |
| 3 | Vibration damping device | 1 2 3 |
| 10 | Pipe assembly | 1 2 3 |
| 15 | Sealing device | 1 2 3 |
| 16 | Sealing element, e.g. sealing ring | 1 2 3 |
| 17 | Sealing lip | 1 2 3 |
| 20 | Firewall | 1 2 3 |
| α | Opening angle | 1 3 |
| A | First zone on one side of the wall | 1 2 3 |
| B | Second zone on the other side of the wall | 1 2 3 |
| H | Opening in firewall | 1 2 3 |
| L | Longitudinal axis of the pipe | 1 2 3 |
| O | Opening of shielding space towards first space | 1 2 3 |
| S | Sealing space | 1 2 3 |

### Detailed description

Aspects and embodiments of the present invention will now be discussed with reference to the accompanying figures. Further aspects and embodiments will be apparent to those skilled in the art.

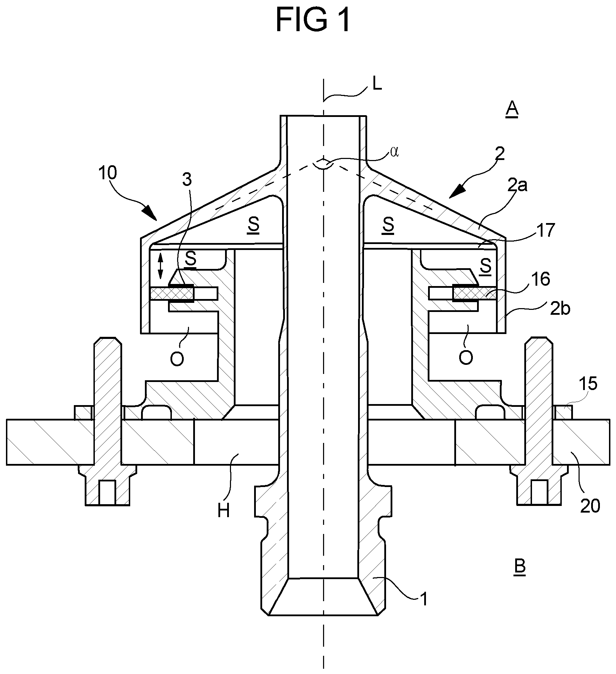

In **Figure 1****,** a first embodiment of a pipe assembly 10 is shown in a sectional view. A pipe 1 traverses a firewall 20 from a first zone A to a second zone B. The firewall 20 separates the zones A, B within a gas turbine engine in an aircraft. Even though, the embodiment of the pipe assembly 10 is not restricted to this particular application, the fire related regulations in aircraft engines are particularly stringent. This means that, e.g., a fire in the first zone A should not spread into the second zone B or vice versa. In the pipe 1 a fluid, such as oil, is flowing, here, from the top in Figure 1 to the bottom. A typical application of an embodiment of a pipe assembly 10 is a pipe 1 connecting different zones within the cowling of an aircraft engine.

The firewall 20 is made from metal to prevent any burning of the material. The firewall 20 furthermore comprises an opening H through which the pipe 1 extends from zone A into zone B. If that opening H is not properly sealed off, hot gases and/or smoke could get into zone B.

As small movements of the pipe 1 and/or the firewall 20 cannot be prevented, the feedthrough design of the pipe assembly 10 requires some movability, here, in particular, some movability in the direction of the longitudinal axis L of the pipe 1.

In the embodiment shown in Figure 1, the pipe assembly 10 comprises a shield device 2 which is connected or attached around the pipe 1. In the embodiment shown, the shield device 2 is in one piece with the pipe 1. In other embodiments, the shield device 2 could, e.g., be welded to the pipe 1.

The shield device 2 circumferentially extends around the pipe 1 and comprises a conical part 2a and a vertical part 2b. The conical part 2a is connected or attached to the pipe 1 itself. This conical part 2a has an opening angle α of approximately 140°, around the longitudinal axis L of the pipe 1, as shown in Figure 1. In other embodiments, the conical part 2a can have a larger or smaller opening angle, depending on the space available for the pipe assembly 10.

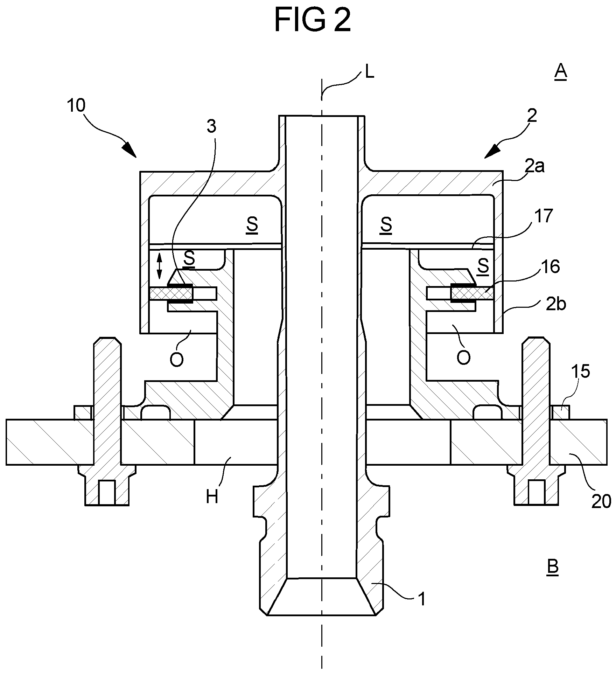

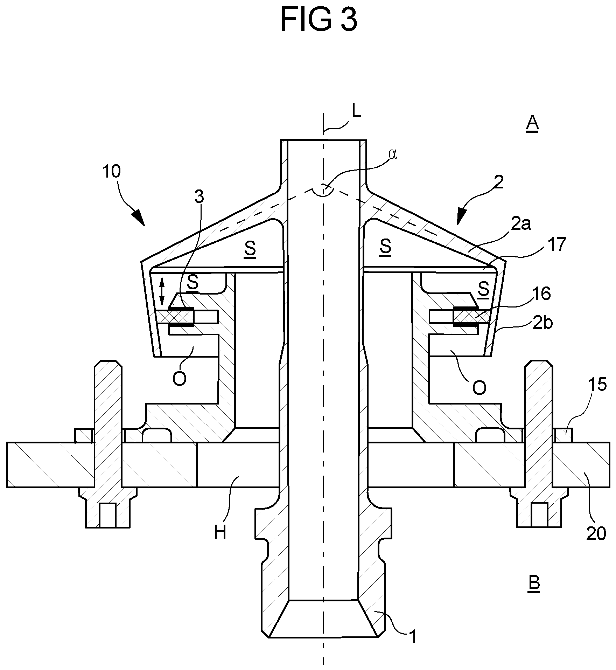

At the distal end of the conical part 2a, the vertical part 2b extends downwards. The conical space within the conical part 2a is thereby extended by a cylindrical part, i.e., bounded by the vertical part 2b. Together, the convex space within the conical part 2a and the vertical part 2b define a sealing space S. Embodiments with the shield devices 2 having a different geometry are shown in Figures 2 and 3.

The shield device 2 provides a spatial separation between the sealing space S around the pipe 1 and a part of the first zone A.

The sealing space S comprises an opening O at the rim of the vertical part 2b.

Into this downward facing opening O (as seen in Figure 1), a sealing device 15, movable in an axial direction, is positioned. The sealing device 15 is axially movable as indicated by the double arrow. The sealing device 15, in this embodiment, is connected with bolts to the firewall 20. So, if the firewall 20 moves, e.g., due to thermal expansion or vibrations, the sealing device can move axially within the sealing space S. The sloped outside surface of the conical part 2a effectively guides spray liquids in zone A.

The sealing device 15 comprises a circumferential sealing element 16 which is made from metal to provide a rubber-free sealing against the inner wall of the vertical part 2b of the sealing device. The sealing element 16 can be made from metal that is softer than the metal of the sealing device 2, at least softer than the metal of the vertical part 2b of the sealing device 2.

With this pipe assembly 10, an axial movement of the pipe 1 traversing the firewall 20 is possible. And - as the pipe 1, the shield device 2 and the firewall 20 are made from fireproof material (e.g., metal), a robust design is achieved. If there is, e.g., a fire in Zone A, the hot gases and/or smoke cannot enter the zone B because the sealing device 15 with its sealing element 16 effectively closes off the zone A from zone B.

The embodiments described herein are using sealing spaces S which are convex, making it easier to shape the counterpart, i.e., the sealing device, which is movably located in that convex space.

As the embodiment of the pipe assembly 10 comprises moving parts in a dynamic environment, a vibration dampening device 3 against vibrations is positioned between the firewall 20 and the sealing device 15.

In **Figure 2****,** a variation of the embodiment described in context of Figure 1 is shown so that reference can be made to the above description. The difference to the embodiment of Figure 1 is that the shield device 2 does not have a conical part 2a. The vertical part 2b of the shield device 2, extends downwards from the circumference of a plate, perpendicular to the longitudinal axis L of the pipe 1. Therefore, the sealing element 16 can travel along the complete sealing space S.

In **Figure 3****,** a further variation of the embodiment described in the context of Figure 1 is shown so that reference can be made to the respective description above.

In this third embodiment, the vertical part 2b of the shield device is tilted lightly inwards, i.e., towards the longitudinal axis L of the pipe 1. This means that the movable sealing element 16 works against some pretension or bias if it moves axially. This increases the sealing effect, as there is a higher force acting at the sealing than in the case of a vertical part 2b without the inward inclination.

In all three embodiments discussed so far, the shield device 2 and the matching sealing device 15, the cross-section in a plane perpendicular to the longitudinal axis L of the pipe 2 is circular and symmetrically shaped around the longitudinal axis L. This allows for an efficient circular sealing, as described. In other embodiments, the cross-sectional shape is non-circular, e.g., it is elliptic or polygonal. This would then define a more complex shaped sealing space S.

Those shapes might be used in situations where the structural space is less suited for a circular design.

In the embodiments discussed, the pipe 1 is assumed to have a circular cross-section. In other embodiments, the pipe 1 could have an elliptic or a polygonal cross-section, so this embodiment could also be called a duct assembly.

It will be understood that the invention is not limited to the embodiments above-described and various modifications and improvements can be made without departing from the scope of the invention as defined by the appended claims.

## Claims

1. A pipe assembly (10) for a pipe (1) traversing a firewall (20) from a first zone (A) to a second zone (B) in an engine, the pipe assembly provides a misalignment capability and comprises:
a shield device (2) that provides a spatial separation between a sealing space (S) around the pipe (1) and a part of the first zone (A), the sealing space (S) having an opening (O) towards another part of the first space (A); and
a sealing device (15) that is movable within the sealing space (S) through the opening (O) to seal off the sealing space (S) against the first zone (A);
wherein the shield device (2) and the sealing device (15) are made from a fireproof material; and
at least a part of the shield device (2) is elastically biased against the sealing device (15).

2. The pipe assembly of claim 1, wherein the sealing assembly (15) is connected to the firewall (20).

3. The pipe assembly of claim 1 or 2, wherein the sealing space (S) around the pipe (1) is at least in parts convex towards the longitudinal axis (L) of the pipe (1).

4. The pipe assembly of claim 3, wherein the sealing space (S) comprises at least one section which has a circular, elliptical or polygonal cross-section.

5. The pipe assembly of claim 3 or 4, wherein the sealing space (S) comprises at least one section which is symmetrical to the longitudinal axis (L) of the pipe (1).

6. The pipe assembly of any preceding claim, wherein the sealing device (15) comprises a least one sealing element (16) which in operation seals against an inner surface of the shield device (2).

7. The pipe assembly of claim 6, wherein the at least one sealing element (16) is made from a metal that is softer than the material of the shield device (2), against which the at least one sealing device (15) is sealing off.

8. The pipe assembly of any preceding claim, wherein at least a part of the shield device (2) is elastically biased against the at least one sealing element (16).

9. The pipe assembly of any preceding claim, wherein the pipe assembly includes at least one vibration damping device (3).

10. The pipe assembly of any preceding claim, wherein the pipe assembly includes at least one sealing lip (17).

11. The pipe assembly of claim 10, wherein the at least one sealing lip (17) is provided at the inner wall of the sealing space (S).

12. The pipe assembly of any preceding claim, wherein the shield device (2) is made in one piece with the pipe (1) or is attached to the pipe (1).

13. The pipe assembly of any preceding claim, wherein the fireproof material is made from metal or is rubber-free.

14. A gas turbine engine that includes at least one pipe assembly (10) of any preceding claim.

## Patentansprüche

1. Rohranordnung (10) für ein Rohr (1), das ein Brandschott (20) von einer ersten Zone (A) zu einer zweiten Zone (B) in einem Triebwerk durchquert, wobei die Rohranordnung eine Fehlausrichtungsfähigkeit bereitstellt und Folgendes umfasst:
eine Abschirmvorrichtung (2), die eine räumliche Trennung zwischen einem Abdichtungsraum (S) um das Rohr (1) und einem Teil der ersten Zone (A) bereitstellt, wobei der Abdichtungsraum (S) eine Öffnung (O) zu einem anderen Teil des ersten Raums (A) hin aufweist; und
eine Abdichtungsvorrichtung (15), die innerhalb des Abdichtungsraums (S) durch die Öffnung (O) beweglich ist, um den Abdichtungsraum (S) gegen die erste Zone (A) abzudichten;
wobei die Abschirmvorrichtung (2) und die Abdichtvorrichtung (15) aus einem feuerfesten Material hergestellt sind; und
mindestens ein Teil der Abschirmvorrichtung (2) elastisch gegen die Abdichtungsvorrichtung (15) vorgespannt ist.

2. Rohranordnung nach Anspruch 1, wobei die Abdichtungsanordnung (15) mit dem Brandschott (20) verbunden ist.

3. Rohranordnung nach Anspruch 1 oder 2, wobei der Abdichtungsraum (S) um das Rohr (1) mindestens teilweise zu der Längsachse (L) des Rohrs (1) hin konvex ist.

4. Rohranordnung nach Anspruch 3, wobei der Abdichtungsraum (S) mindestens einen Abschnitt umfasst, der einen kreisförmigen, elliptischen oder polygonalen Querschnitt aufweist.

5. Rohranordnung nach Anspruch 3 oder 4, wobei der Abdichtungsraum (S) mindestens einen Abschnitt umfasst, der zu der Längsachse (L) des Rohrs (1) symmetrisch ist.

6. Rohranordnung nach einem vorhergehenden Anspruch, wobei die Abdichtungsvorrichtung (15) mindestens ein Abdichtungselement (16) umfasst, das im Betrieb gegen eine Innenfläche der Abschirmvorrichtung (2) abdichtet.

7. Rohranordnung nach Anspruch 6, wobei das mindestens eine Abdichtungselement (16) aus einem Metall hergestellt ist, das weicher als das Material der Abschirmvorrichtung (2) ist, gegen das die mindestens eine Abdichtungsvorrichtung (15) abdichtet.

8. Rohranordnung nach einem vorhergehenden Anspruch, wobei mindestens ein Teil der Abschirmvorrichtung (2) elastisch gegen das mindestens eine Abdichtungselement (16) vorgespannt ist.

9. Rohranordnung nach einem vorhergehenden Anspruch, wobei die Rohranordnung mindestens eine Vibrationsdämpfungsvorrichtung (3) beinhaltet.

10. Rohranordnung nach einem vorhergehenden Anspruch, wobei die Rohranordnung mindestens eine Abdichtungslippe (17) beinhaltet.

11. Rohranordnung nach Anspruch 10, wobei die mindestens eine Abdichtungslippe (17) an der Innenwand des Abdichtungsraums (S) bereitgestellt ist.

12. Rohranordnung nach einem vorhergehenden Anspruch, wobei die Abschirmvorrichtung (2) einstückig mit dem Rohr (1) hergestellt ist oder an dem Rohr (1) befestigt ist.

13. Rohranordnung nach einem vorhergehenden Anspruch, wobei das feuerfeste Material aus Metall hergestellt oder gummifrei ist.

14. Gasturbinentriebwerk, das mindestens eine Rohranordnung (10) nach einem vorhergehenden Anspruch beinhaltet.

## Revendications

1. Ensemble de tuyau (10) pour un tuyau (1) traversant une paroi pare-feu (20) d'une première zone (A) à une seconde zone (B) dans un moteur, l'ensemble de tuyau fournit une capacité de désalignement et comprend :
un dispositif de protection (2) qui assure une séparation spatiale entre un espace d'étanchéité (S) autour du tuyau (1) et une partie de la première zone (A), l'espace d'étanchéité (S) comportant une ouverture (O) vers une autre partie du premier espace (A) ; et
un dispositif d'étanchéité (15) qui est mobile à l'intérieur de l'espace d'étanchéité (S) à travers l'ouverture (O) pour assurer l'étanchéité de l'espace d'étanchéité (S) contre la première zone (A) ;
dans lequel le dispositif de protection (2) et le dispositif d'étanchéité (15) sont réalisés en un matériau ignifuge ; et
au moins une partie du dispositif de protection (2) est sollicitée élastiquement contre le dispositif d'étanchéité (15).

2. Ensemble de tuyau de la revendication 1, dans lequel l'ensemble d'étanchéité (15) est relié à la paroi pare-feu (20).

3. Ensemble de tuyau de la revendication 1 ou 2, dans lequel l'espace d'étanchéité (S) autour du tuyau (1) est au moins en partie convexe vers l'axe longitudinal (L) du tuyau (1).

4. Ensemble de tuyau de la revendication 3, dans lequel l'espace d'étanchéité (S) comprend au moins une section qui comporte une section transversale circulaire, elliptique ou polygonale.

5. Ensemble de tuyau de la revendication 3 ou 4, dans lequel l'espace d'étanchéité (S) comprend au moins une section qui est symétrique à l'axe longitudinal (L) du tuyau (1).

6. Ensemble de tuyau d'une quelconque revendication précédente, dans lequel le dispositif d'étanchéité (15) comprend au moins un élément d'étanchéité (16) qui, en fonctionnement, assure l'étanchéité contre une surface intérieure du dispositif de protection (2).

7. Ensemble de tuyau de la revendication 6, dans lequel l'au moins un élément d'étanchéité (16) est réalisé en un métal qui est plus mou que le matériau du dispositif de protection (2), contre lequel l'au moins un dispositif d'étanchéité (15) assure l'étanchéité.

8. Ensemble de tuyau d'une quelconque revendication précédente, dans lequel au moins une partie du dispositif de protection (2) est sollicitée élastiquement contre l'au moins un élément d'étanchéité (16).

9. Ensemble de tuyau d'une quelconque revendication précédente, dans lequel l'ensemble de tuyau comprend au moins un dispositif d'amortissement de vibrations (3).

10. Ensemble de tuyau d'une quelconque revendication précédente, dans lequel l'ensemble de tuyau comprend au moins une lèvre d'étanchéité (17).

11. Ensemble de tuyau de la revendication 10, dans lequel l'au moins une lèvre d'étanchéité (17) est prévue au niveau de la paroi interne de l'espace d'étanchéité (S).

12. Ensemble de tuyau d'une quelconque revendication précédente, dans lequel le dispositif de protection (2) est réalisé en une seule pièce avec le tuyau (1) ou est fixé au tuyau (1).

13. Ensemble de tuyau d'une quelconque revendication précédente, dans lequel le matériau ignifuge est réalisé en métal ou est exempt de caoutchouc.

14. Moteur à turbine à gaz qui comprend au moins un ensemble de tuyau (10) d'une quelconque revendication précédente.
